# EUROPÄISCHE PATENTSCHRIFT

(11) **EP 0 683 355 B1**
(45) Veröffentlichungstag und Bekanntmachung des Hinweises auf die Patenterteilung: **01.09.1999**
(21) Anmeldenummer: 95107503.5
(22) Anmeldetag: 17.05.1995
(51) Int. Cl.: F21Q 1/00, F21M 3/16, F21M 3/05

(54) **Kraftfahrzeugleuchte**
Vehicle lamp
Lampe pour véhicule automobile

(30) Priorität: 20.05.1994 DE 4417695
(43) Veröffentlichungstag der Anmeldung: 22.11.1995
(73) Patentinhaber: REITTER & SCHEFENACKER GmbH & Co. KG, D-73730 Esslingen (DE)
(72) Erfinder: Zwick, Hubert, D-70184 Stuttgart (DE); Bracht, Gernot Michael, D-75180 Pforzheim (DE)
(74) Vertreter: Kohl, Karl-Heinz

(56) Entgegenhaltungen:
- FR-A- 2 678 353
- GB-A- 193 439
- GB-A- 1 360 481
- US-A- 2 755 374

## Beschreibung

Die Erfindung betrifft eine Kraftfahrzeuglichte nach dem Oberbegriff des Anspruches 1.

Bei dieser bekannten Kraftfahrzeugleuchte (FR-A-2 678 353) gelangen alle vom Leuchtenkörper ausgehenden Strahlen zum Prisma, an dem sie zum Reflektor reflektiert werden. Von ihm werden die Lichtstrahlen zur Lichtscheibe reflektiert. Eine gleichmäßige Ausleuchtung der Lichtscheibe wird dadurch nicht erreicht.

Es ist auch eine Kraftfahrzeugleuchte bekannt (GB-A-1 360 481), bei der die vom Leuchtenkörper ausgesandten Lichtstrahlen nach Reflexion an einem Reflektor durch eine Blendenöffnung fallen und auf einen an der Innenseite der Lichtscheibe vorgesehenen Spiegel treffen. Er reflektiert die Strahlen zu einem weiteren Reflektor, der die Lichtstrahlen parallelisiert und zum Lichtfenster reflektiert. Auch bei dieser Kraftfahrzeugleuchte ist eine gleichmäßige Ausleuchtung der Lichtscheibe nicht gewährleistet.

Bei einer anderen bekannten Kraftfahrzeugleuchte (US-A-2 755 374) fallen alle vom Leuchtenkörper ausgehenden Lichtstrahlen nach Reflexion an einem Reflektor auf einen weiteren, ellipsoiden Reflektor. Er reflektiert die Lichtstrahlen zu einem dritten Reflektor, der die Lichtstrahlen parallelisiert und zur Lichtscheibe reflektiert. Diese Kraftfahrzeugleuchte ist konstruktiv aufwendig ausgebildet. Die Lichtscheibe wird nur ungenügend ausgeleuchtet.

Der Erfindung liegt die Aufgabe zugrunde, die gattungsgemäße Kraftfahrzeugleuchte so auszubilden, daß bei einfacher konstruktiver Ausbildung eine gleichmäßige Ausleuchtung der Lichtscheibe erreicht wird.

Diese Aufgabe wird bei einer Leuchte der gattungsbildenden Art erfindungsgemäß mit den kennzeichnenden Merkmalen des Anspruches 1 gelöst.

Bei der erfindungsgemäßen Kraftfahrzeugleuchte fallen nicht alle Lichtstrahlen des Leuchtenkörpers auf das Prisma. Ein Teil der Lichtstrahlen fällt direkt auf die Lichtscheibe und wird nicht am Prisma reflektiert. Dieser Teil der Lichtstrahlen gelangt somit auf kurzem Wege zur Lichtscheibe und hat eine entsprechend hohe Lichtstärke. Sie führt dazu, daß in Verbindung mit dem anderen, am Prisma reflektierten Teil der Lichtstrahlen die Lichtscheibe, insbesondere auch in Höhe des Prismas, gleichmäßig ausgeleuchtet wird, ohne daß eine konstruktiv aufwendige Gestaltung erforderlich ist.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigt:
- Fig. 1: in einem Längsschnitt einen Teil einer erfindungsgemäßen Kraftfahrzeugleuchte,
- Fig. 2: einen Schnitt längs der Linie II-II in Fig. 1,
- Fig. 3: in Ansicht die Kraftfahrzeugleuchte gem. Fig. 1,
- Fig. 4 bis 7: jeweils in Darstellung entsprechend Fig. 2 weitere Ausführungsformen von erfindungsgemäßen Kraftfahrzeugleuchten,
- Fig. 8: eine Draufsicht auf einen Teil einer weiteren Ausführungsform einer erfindungsgemäßen Kraftfahrzeugleuchte,
- Fig. 9: im Längsschnitt die Kraftfahrzeugleuchte gem. Fig. 8.

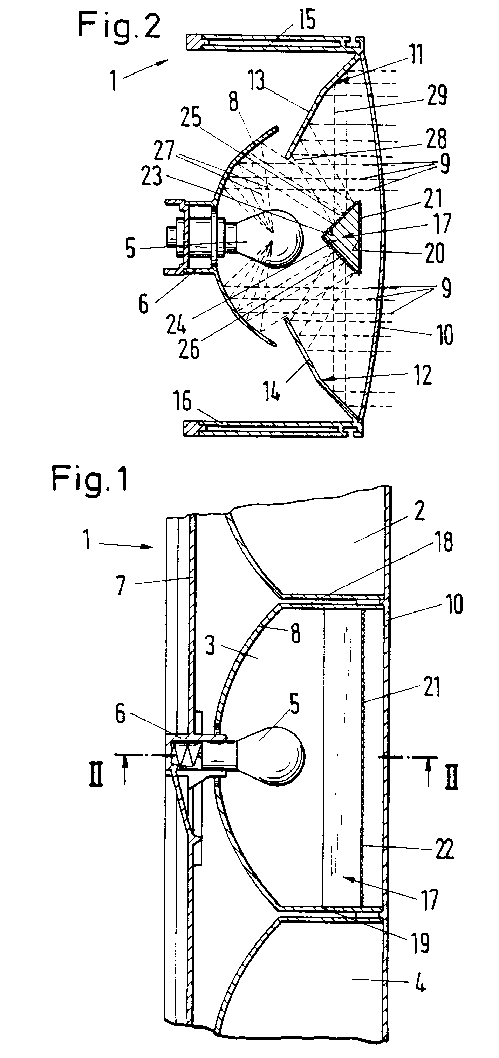

Die Kraftfahrzeugleuchte ist im Ausführungsbeispiel eine Heckleuchte mit einem Gehäuse 1, in dem nebeneinander Leuchtenkammern 2 bis 4 vorgesehen sind. Jede Leuchtenkammer hat eine Glühlampe 5, von denen in den Fig. 1 und 2 nur eine Glühlampe dargestellt ist. Die Glühlampe 5 sitzt in bekannter Weise in einer Fassung 6, die an der Rückwand 7 des Gehäuses 1 angeordnet ist. Die in den übrigen Leuchtenkammern vorgesehenen Glühlampen 5 sind in gleicher Weise gehalten.

Die Glühlampe 5 der Leuchtenkammer 3 wird von einem Reflektor 8 teilweise umgeben, an dem die von der Glühlampe 5 ausgesandten Strahlen reflektiert werden. Der Reflektor 8 kann im Querschnitt elliptisch, parabelförmig oder dergleichen ausgebildet sein oder auch freie Formflächen haben. Wie Fig. 2 zeigt, wird ein Teil 9 der Lichtstrahlen vom Reflektor 8 zu einer Lichtscheibe 10 reflektiert, die das Gehäuse 1 an der Rückseite verschließt. Im Bereich zwischen der Lichtscheibe 10 und dem Reflektor 8 befinden sich zwei Zusatzreflektoren 11 und 12 (Fig. 2), die aus ebenen Spiegelflächen 13, 14 zusammengesetzt sein können. Die Zusatzreflektoren 11, 12 können aber auch eine entsprechend gekrümmte Querschnittsform haben. Wie Fig. 2 zeigt, erstrecken sich die Zusatzreflektoren 11, 12 vom oberen und unteren Rand der Lichtscheibe 10 aus in die Leuchtenkammer 3. Die Zusatzreflektoren 11, 12 schließen an Seitenwände 15, 16 an, mit denen sie vorteilhaft einstückig ausgebildet sind. Über die Seitenwände 15, 16 sind die Zusatzreflektoren 11, 12 am Leuchtengehäuse 1, vorzugsweise an dessen Rand, befestigt.

Die Zusatzreflektoren 11, 12 erstrecken sich so weit in die Leuchtenkammer 3 (Fig. 2), daß sie, in Ansicht auf die Lichtscheibe 10 gesehen, den Reflektor 8 geringfügig überlappen.

Im Bereich zwischen der Glühlampe 5 und der Lichtscheibe 10 befindet sich in Höhe der Glühlampe ein Prisma 17, das sich über die gesamte Länge der Leuchtenkammer 3 erstreckt und an Seitenwände 18, 19 der Leuchtenkammer 3 anschließt (Fig. 1). Das Prisma 17 verläuft mit geringem Abstand von der Lichtscheibe 10 innerhalb der Leuchtenkammer 3 und besteht vorzugsweise aus geeignetem Kunststoff. Abweichend vom dargestellten Ausführungsbeispiel kann das Prisma 17 auch einstückig mit der Lichtscheibe 10 ausgebildet sein. Die der Lichtscheibe 10 zugewandte ebene Prismenseite 20 kann mit einer Rückstrahleroptik 21 versehen sein. Sie besteht aus einzelnen kleinen Prismen 22, die vorzugsweise Tripelform haben. Eine solche Ausbildung des Prismas 17 hat den Vorteil, daß für einen Rückstrahler eine gesonderte Fläche nicht erforderlich ist, sondern daß die Prismenseite 20 hierfür verwendet werden kann.

Die beiden anderen Seiten 23 und 24 des im Querschnitt dreieckigen Prismas 17 sind mit Spiegelflächen 25 und 26 versehen, die dafür sorgen, daß die auf das Prisma 17 auffallenden Lichtstrahlen in wenigstens zwei Lichtstrahlen aufgeteilt werden. Wie Fig. 2 zeigt, trifft ein Teil 27 der von der Glühlampe 5 ausgesandten Strahlen nach der Reflexion am Reflektor 8 auf die Spiegelflächen 25, 26 des Prismas 17. Von dort werden diese Teilstrahlen zu den Zusatzreflektoren 11, 12 reflektiert, wobei diese Lichtstrahlen in zwei Teilstrahlen 28 und 29 aufgespalten werden. Beide Teilstrahlen 28, 29 gelangen auf die Zusatzreflektoren 11, 12, welche diese Teilstrahlen dann in Richtung auf die Lichtscheibe 10 reflektieren.

Der Reflektor 8, das Prisma 17 und die Zusatzreflektoren 11, 12 sind so ausgebildet, daß sämtliche Teilstrahlen 9, 28, 29 parallel zueinander durch die Lichtscheibe 10 hindurchtreten. Somit wird die Lichtscheibe 10 über ihre Höhe und Breite gleichmäßig ausgeleuchtet, wobei ein Teil 9 der von der Glühlampe 5 ausgesandten Strahlen durch den Reflektor 8 unmittelbar zur Lichtscheibe 10 und ein anderer Teil 27 bis 29 vom Reflektor 8 über das Prisma 17 und die Zusatzreflektoren 11, 12 zur Lichtscheibe 10 reflektiert wird.

Es ist möglich, die Spiegelflächen 25, 26 an den Prismenseiten 23, 24 so auszubilden, daß der Teil 27 der Lichtstrahlen an den Spiegelflächen 25, 26 nicht aufgespalten, sondern lediglich zu den Zusatzreflektoren 11, 12 reflektiert wird.

Das Prisma 17 ist bevorzugt in derjenigen Leuchtenkammer 3 untergebracht, in der eine rote Signalfarbe der Leuchte erzeugt wird. Das Prisma 17 kann sich aber auch über die gesamte Länge der Leuchte erstrecken. In diesem Falle ist die der Lichtscheibe 10 zugewandte Seite 20 des Prismas 17 außerhalb des dem Rotlicht zugeordneten Bereiches der Leuchte farbneutral ausgebildet. In diesen Bereichen kann die Prismenseite 20 aber auch beispielsweise im Farbton der Lackierung des Kraftfahrzeuges gehalten werden. Da die Rückstrahleroptik 21 nicht mehr an der Lichtscheibe 10, sondern am Prisma 17 vorgesehen ist, bietet die Leuchte ein einheitliches Erscheinungsbild. Die den einzelnen Signalleuchten zugeordneten Bereiche der Lichtscheibe 10 können die entsprechende Farbtönung aufweisen, so daß die Lichtscheibe eine farbliche Unterteilung aufweist. Es ist aber auch möglich, die Lichtscheibe 10 insgesamt einheitlich einzufärben und in den Strahlengang innerhalb der Leuchte ein Filter einzuschalten, das bei Betätigen der jeweiligen Glühlampe 5 die entsprechende Signalfarbe der Lichtscheibe erzeugt. Auf jeden Fall ist auf der Lichtscheibe 10 eine entsprechende Lichtoptik nicht sichtbar.

Anstelle der Glühlampe 5 kann selbstverständlich auch jeder andere geeignete Leuchtenkörper, wie eine Neonröhre oder eine LED eingesetzt werden.

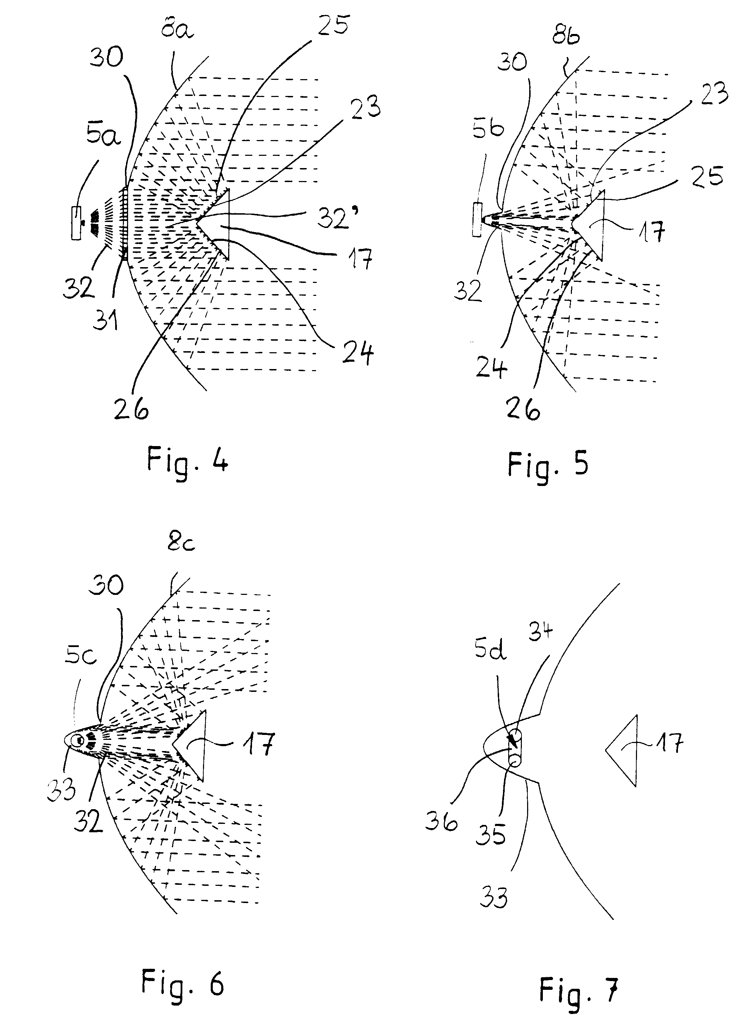

Beim Ausführungsbeispiel nach Fig. 4 wird als Leuchtenkörper eine LED 5a verwendet, die auf der von der (nicht dargestellten) Lichtscheibe abgewandten Seite des Reflektors 8a angeordnet ist. Wie beim vorigen Ausführungsbeispiel kann der Reflektor 8a im Querschnitt elliptisch, parabelförmig oder dergleichen ausgebildet sein oder freie Formflächen haben. Der Reflektor 8a hat eine Öffnung 30, in der eine Licht brechende Optik 31 angeordnet ist. Das von der LED 5a ausgesandte Licht trifft auf die Licht brechende Optik 31, durch welche die divergierenden Strahlen 32 in parallele Strahlen 32' gebrochen werden. Sie treffen auf die Prismenseiten 23 und 24 des Prismas 17, das auf der der Lichtscheibe zugewandten Seite des Reflektors 8a mit Abstand zur Optik 31 vorgesehen ist. Die Abmessungen des Prismas 17 sind so auf die Abmessungen der Optik 31 abgestimmt, daß sämtliche durch die Optik 31 hindurchtretende Strahlen 32' auf die Prismenseiten 23 und 24 treffen. Die Prismenseiten sind wie beim vorigen Ausführungsbeispiel mit den Spiegelflächen 25 und 26 versehen, die so ausgebildet sind, daß die parallelen Strahlen 32' zum Reflektor 8a reflektiert werden. An ihm werden die Strahlen zur (nicht dargestellten) Lichtscheibe der Leuchte reflektiert. Die Anordnung ist so getroffen, daß die vom Reflektor 8a zur Lichtscheibe reflektierten Strahlen parallel zueinander verlaufen. Das Prisma 17 ist in bezug auf die Optik 31 derart symmetrisch angeordnet, daß auf die beiden Prismenseiten 23, 24 gleich viele Strahlen 32' treffen.

Die Spiegelflächen 25, 26 der Prismenseiten 23, 24 können entsprechend dem vorigen Ausführungsbeispiel auch so gestaltet sein, daß die auf das Prisma 17 auffallenden Lichtstrahlen 32' in wenigstens zwei Lichtstrahlen aufgeteilt und zum Reflektor 8a reflektiert werden. Im übrigen kann das Prisma 17 entsprechend der vorigen Ausführungsform ausgebildet sein. Mit dem Prisma 17 wird eine optimale Ausleuchtung der Lichtscheibe in einfacher Weise erreicht.

Die Leuchte kann mehrere Reflektoren 8a für die Lichtverteilung aufweisen. Das Lichtfenster selbst benötigt keine Linsen, Umlenkelemente und dergleichen, so daß es einfach ausgebildet sein kann. Die LED 5a befindet sich in Strahlungsrichtung hinter dem Prisma 17, so daß der Leuchtenkörper von außen nicht sichtbar ist.

Beim Ausführungsbeispiel nach Fig. 5 wird als Leuchtenkörper wiederum eine LED 5b verwendet, deren Strahlen 32 durch die Öffnung 30 des Reflektors 8b verlaufen. Im Gegensatz zum vorigen Ausführungsbeispiel ist eine Licht brechende Optik nicht vorhanden. Die von der LED 5b aus divergierenden Strahlen 32 treffen darum nach dem Durchtritt durch die Öffnung 30 teilweise auf das Prisma 17, an dessen Prismenflächen 23 und 24 die Strahlen zum Reflektor 8b reflektiert werden. An ihm werden die Strahlen wiederum so reflektiert, daß sie parallel zueinander durch die (nicht dargestellte) Lichtscheibe treten. Die Prismenseiten 23, 24 sind mit entsprechenden Spiegelflächen 25 und 26 versehen.

Da die Strahlen 32 von der LED 5b aus divergierend verlaufen, trifft ein Teil der Strahlen 32 nicht auf das Prisma 17, sondern gelangt ohne Reflexion direkt zur Lichtscheibe.

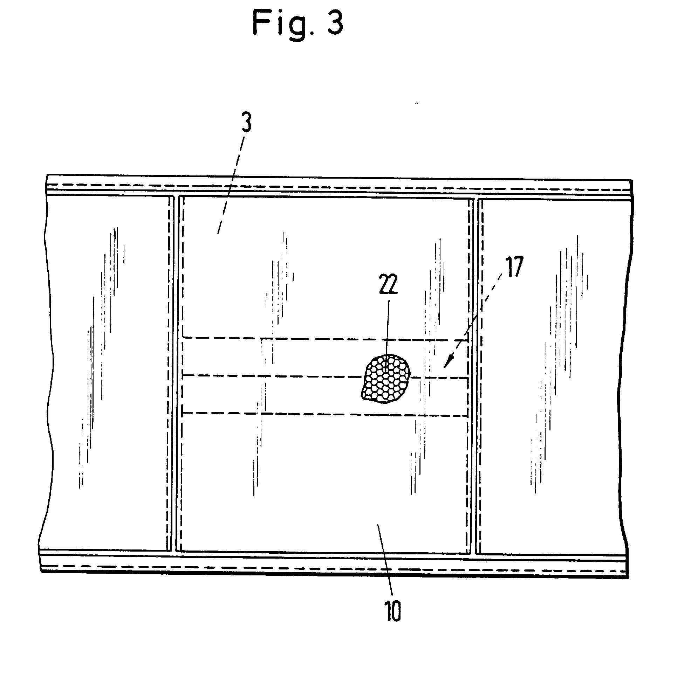

Auch mit dieser Ausführungsform wird eine optimale Ausleuchtung der Lichtscheibe über deren Höhe und Breite erreicht. Das Prisma 17 kann im übrigen gleich ausgebildet sein wie beim Ausführungsbeispiel nach den Fig. 1 bis 3.

Die Ausführungsform nach Fig. 6 unterscheidet sich vom Ausführungsbeispiel nach Fig. 5 lediglich dadurch, daß als Leuchtenkörper 5c eine stabförmige Neonröhre verwendet wird. Die von ihr ausgesandten Strahlen 32 treten durch die Öffnung 30 des Reflektors 8c hindurch und treffen teilweise auf das Prisma 17. Der übrige Teil der Strahlen 32 gelangt unmittelbar zur (nicht dargestellten) Lichtscheibe der Leuchte. Die Neonröhre 5c wird von einem Reflektor 33 umgeben, der von der Öffnung 30 des Reflektors 8c aus über dessen vom Prisma 17 abgewandte Seite ragt. Dieser Reflektor 33 kann im Querschnitt zylindrisch, parabelförmig und dergleichen ausgebildet sein. Durch diesen zusätzlichen Reflektor 33 ist gewährleistet, daß das von der Neonröhre 5c ausgesandte Licht vollständig durch die Öffnung 30 des Reflektors 8c reflektiert wird.

Fig. 7 zeigt eine Ausführungsform, bei der der Leuchtenkörper 5d eine U-förmige Neonröhre ist. Sie hat die beiden Schenkel 34 und 35, die durch ein gebogenes Verbindungsstück 36 ineinander übergehen. Die Schenkel 34, 35 der Neonröhre 5d erstrecken sich parallel zur Längsachse des Prismas 17. Die Neonröhre 5d ist im Zusatzreflektor 33 untergebracht, der gleich ausgebildet ist wie beim vorigen Ausführungsbeispiel.

Der Übersichtlichkeit wegen sind in Fig. 7 die von der Neonröhre 5d ausgesandten Strahlen nicht dargestellt. Der Strahlenverlauf entspricht der Darstellung in Fig. 6. Im übrigen ist das Ausführungsbeispiel nach Fig. 7 gleich ausgebildet wie das Ausführungsbeispiel nach Fig. 6.

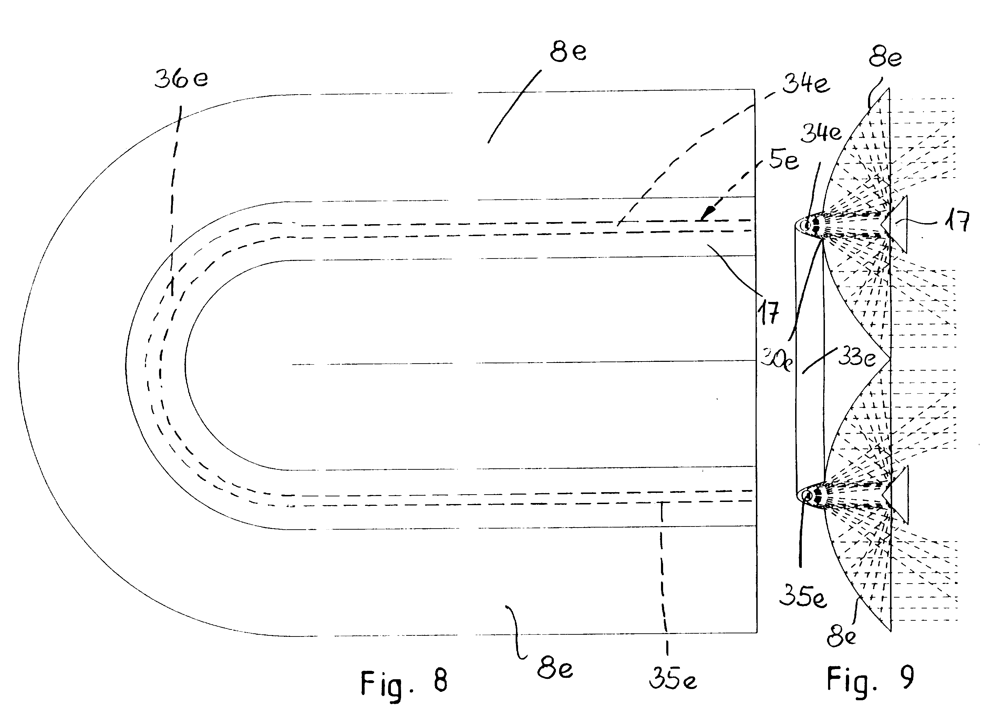

Die Fig. 8 und 9 zeigen einen Teil einer Kraftfahrzeugleuchte, die als Leuchtenkörper wiederum eine U-förmige Neonröhre 5e aufweist. Sie hat die beiden parallel zueinander liegenden Schenkel 34e, 35e, die durch das gebogene Verbindungsstück 36e ineinander übergehen. Auf der vom Prisma 17 abgewandten Seite des Reflektors 8e wird die Neonröhre 5e vom Zusatzreflektor 33e umgeben, der entsprechend der Neonröhre 5e U-förmig ausgebildet ist. Er umgibt die Neonröhre 5e über deren ganze Länge. Im Querschnitt kann der Zusatzreflektor 33e wiederum teilzylindrisch, parabelförmig oder dergleichen ausgebildet sein.

Auch das Prisma 17 hat einen entsprechend U-förmigen Verlauf (Fig. 8), so daß es über die gesamte Länge in Strahlrichtung vor der Neonröhre 5e liegt.

Auch der Reflektor 8e hat einen U-förmigen Verlauf. Wie die Fig. 8 und 9 zeigen, liegen die einander zugewandten Ränder des Reflektors 8e linienförmig aneinander. Im übrigen ist der Reflektor 8e im Querschnitt gleich ausgebildet wie bei den vorigen Ausführungsbeispielen.

Die Öffnung 30e, durch welche die von der Neonröhre 5e ausgesandten Strahlen treten, verläuft ebenfalls U-förmig. Somit tritt das über die Länge der Neonröhre 5e ausgesandte Licht durch diese U-förmige Öffnung 30e durch den Reflektor 8e und trifft teilweise auf das U-förmige Prisma. Der übrige Teil der Lichtstrahlen gelangt unmittelbar zur (nicht dargestellten) Lichtscheibe der Leuchte. Der Strahlenverlauf ist gleich wie beim Ausführungsbeispiel nach Fig. 6.

Die Neonröhre und damit auch das Prisma 17 können anstelle einer U-förmigen Ausbildung auch eine andere Formgebung haben, zum Beispiel ringförmige, w-förmige, s-förmige, spiralförmige oder wellenförmige Gestaltung haben. Auch können die einander zugewandten Ränder des U-förmigen Reflektors 8e Abstand voneinander haben.

Als Leuchtenkörper kommen nicht nur Glühlampen, LEDs und Neonröhren in Betracht, sondern beispielsweise aus Lichtleiter.

## Patentansprüche

1. Kraftfahrzeugleuchte mit einem Gehäuse (1), in dem mindestens ein Leuchtenkörper (5, 5a bis 5e) und mindestens ein Reflektor (8, 11, 12; 8a bis 8c; 8e) angeordnet sind, der zusammen mit dem Leuchtenkörper (5, 5a bis 5e) hinter einer Lichtscheibe (10) liegt, und mit einem Prisma (17), das im Strahlengang zumindest eines Teils (27, 32') der vom Leuchtenkörper (5, 5a bis 5e) ausgehenden Lichtstrahlen liegt und diese zum Reflektor (11, 12; 8a bis 8c, 8e) reflektiert, der diese Lichtstrahlen (27, 32') in Richtung auf die Lichtscheibe (10) reflektiert,
dadurch gekennzeichnet, daß ein Teil (9) der Lichtstrahlen am Prisma (17) vorbei direkt auf die Lichtscheibe (10) fällt.

2. Leuchte nach Anspruch 1,
dadurch gekennzeichnet, daß die vom Prisma (17) reflektierten Lichtstrahlen (27) zu wenigstens einem Zusatzreflektor (11, 12) reflektiert werden.

3. Leuchte nach Anspruch 2,
dadurch gekennzeichnet, daß beiderseits des Prismas (17) jeweils ein Zusatzreflektor (11, 12) vorgesehen ist.

4. Leuchte nach Anspruch 2 oder 3,
dadurch gekennzeichnet, daß der Zusatzreflektor (11, 12) den Reflektor (8) überlappt, in Ansicht auf die Lichtscheibe (10) gesehen.

5. Leuchte nach einem der Ansprüche 1 bis 4,
dadurch gekennzeichnet, daß die im Strahlenweg liegenden Seiten (23, 24) des Prismas (17) mit Spiegelflächen (25, 26) versehen sind.

6. Leuchte nach einem der Ansprüche 1 bis 5,
dadurch gekennzeichnet, daß die der Lichtscheibe (10) zugewandte Seite (20) des Prismas (17) mit einer Rückstrahleroptik (21) versehen ist.

7. Leuchte nach einem der Ansprüche 1 bis 6,
dadurch gekennzeichnet, daß das Prisma (17) Abstand von der Lichtscheibe (10) hat.

8. Leuchte nach einem der Ansprüche 1 bis 6,
dadurch gekennzeichnet, daß das Prisma (17) einstükkig mit der Lichtscheibe (10) ausgebildet ist.

9. Leuchte nach einem der Ansprüche 1 bis 8,
dadurch gekennzeichnet, daß sich das Prisma (17) über die ganze Länge der den Leuchtenkörper (5, 5a bis 5e) aufweisenden Leuchtenkammer (3) erstreckt.

10. Leuchte nach einem der Ansprüche 2 bis 9,
dadurch gekennzeichnet, daß der Zusatzreflektor (11, 12) zum Reflektor (8) und zum Prisma (17) so angeordnet ist, daß ein Teil (9) der vom Reflektor (8) reflektierten Lichtstrahlen direkt auf die Lichtscheibe (10) fällt.

11. Leuchte nach einem der Ansprüche 1 bis 10,
dadurch gekennzeichnet, daß das Prisma (17) in Höhe des Leuchtenkörpers (5) liegt.

12. Leuchte nach einem der Ansprüche 1 bis 11,
dadurch gekennzeichnet, daß der Leuchtenkörper (5a bis 5e) auf der vom Prisma (17) abgewandten Seite des Reflektors (8a bis 8e) angeordnet ist, der eine Durchtrittsöffnung (30) für die Lichtstrahlen (32) aufweist.

13. Leuchte nach Anspruch 12,
dadurch gekennzeichnet, daß in der Durchtrittsöffnung (30) eine Lichtbrechungsoptik (31) angeordnet ist.

14. Leuchte nach Anspruch 12 oder 13,
dadurch gekennzeichnet, daß die durch die Durchtrittsöffnungen (30) gelangenden Lichtstrahlen (32) wenigstens teilweise auf das Prisma (17) fallen und von ihm zum Reflektor (8a bis 8e) reflektiert werden.

15. Leuchte nach Anspruch 14,
dadurch gekennzeichnet, daß ein Teil der Lichtstrahlen (32) nach dem Durchgang durch die Durchtrittsöffnung (30) unmittelbar auf die Lichtscheibe (10) fällt.

16. Leuchte nach einem der Ansprüche 1 bis 15,
dadurch gekennzeichnet, daß der Leuchtenkörper (5) eine Glühlampe ist.

17. Leuchte nach einem der Ansprüche 1 bis 15,
dadurch gekennzeichnet, daß der Leuchtenkörper (5a, 5b) mindestens eine LED ist.

18. Leuchte nach einem der Ansprüche 1 bis 15,
dadurch gekennzeichnet, daß der Leuchtenkörper (5c bis 5e) eine Neonröhre ist.

## Claims

1. A vehicle lamp comprising a housing (1), in which are arranged at least one luminous body (5, 5a to 5e) and at least one reflector (8, 11, 12; 8a to 8c; 8e) which, together with the luminous body (5, 5a to 5e), lies behind a lamp glass (10), and comprising a prism (17) which lies in the path of at least a portion (27, 32') of the light rays emanating from the luminous body (5, 5a to 5e) and reflects them towards the reflector (8, 11, 12; 8a to 8c; 8e) which reflects these light rays (27, 32') towards the lamp glass (10), characterised in that a portion (9) of the light rays bypasses the prism (17) and falls directly onto the lamp glass (10).

2. A lamp according to claim 1, characterised in that the light rays (27) reflected by the prism (17) are reflected towards at least one additional reflector (11, 12).

3. A lamp according to claim 2, characterised in that an additional reflector (11, 12) is provided on either side of the prism (17).

4. A lamp according to claim 2 or 3, characterised in that the additional reflector (11, 12) overlaps the reflector (8) when looking towards the lamp glass (10).

5. A lamp according to any one of claims 1 to 4, characterised in that the sides (23, 24) of the prism (17) lying in the path of the rays are provided with reflecting surfaces (25, 26).

6. A lamp according to any one of claims 1 to 5, characterised in that the side (20) of the prism (17) facing the lamp glass (10) is provided with a reflector lens (21).

7. A lamp according to any one of claims 1 to 6, characterised in that the prism (17) is at a distance from the lamp glass (10).

8. A lamp according to any one of claims 1 to 6, characterised in that the prism (17) is formed in one-piece with the lamp glass (10).

9. A lamp according to any one of claims 1 to 8, characterised in that the prism (17) extends over the entire length of the lamp chamber (3) containing the luminous body (5, 5a to 5e).

10. A lamp according to any one of claims 2 to 9, characterised in that the additional reflector (11, 12) is so arranged relative to the reflector (8) and the prism (17) that a portion (9) of the light rays reflected by the reflector (8) falls directly onto the lamp glass (10).

11. A lamp according to any one of claims 1 to 10, characterised in that the prism (17) is arranged at the level of the luminous body (5).

12. A lamp according to any one of claims 1 to 11, characterised in that the luminous body (5a to 5e) is arranged on the side of the reflector (8a to 8e) remote from the prism (17), the reflector (8a to 8e) having a passage opening (30) for the light rays (32).

13. A lamp according to claim 12, characterised in that a light-refracting lens (31) is arranged in the passage opening (30).

14. A lamp according to claim 12 or 13, characterised in that at least some of the light rays (32) passing through the passage openings (30) fall onto the prism (17) and are reflected from there to the reflector (8a to 8e).

15. A lamp according to claim 14, characterised in that some of the light rays (32) fall directly onto the lamp glass (10) after passing through the passage opening (30).

16. A lamp according to any one of claims 1 to 15, characterised in that the luminous body (5) is an incandescent lamp.

17. A lamp according to any one of claims 1 to 15, characterised in that the luminous body (5a, 5b) is at least one LED.

18. A lamp according to any one of claims 1 to 15, characterised in that the luminous body (5c to 5e) is a neon tube.

## Revendications

1. Feu de véhicule comportant un boîtier (1), dans lequel sont agencés au moins une lampe (5, 5a à 5e) et au moins un réflecteur (8, 11, 12 ; 8a à 8c ; 8e) qui repose conjointement avec la lampe (5, 5a à 5e) derrière une plaque d'éclairement (10), et comportant un prisme (17) qui se trouve dans le trajet des rayons d'au moins une partie (27, 32') des rayons lumineux provenant de la lampe (5, 5a à 5e) et qui réfléchit ces rayons lumineux vers le réflecteur (8, 11, 12 ; 8a à 8c ; 8e), lequel réfléchit ces rayons lumineux (27, 32') en direction de la plaque d'éclairement (10), caractérisé en ce qu'une partie (9) des rayons lumineux tombe directement sur la plaque d'éclairement (10) en passant à côté du prisme (17).

2. Feu selon la revendication 1, caractérisé en ce que les rayons lumineux (27) réfléchis par le prisme (17) sont réfléchis vers au moins un réflecteur additionnel (11, 12).

3. Feu selon la revendication 2, caractérisé en ce qu'un réflecteur additionnel (11, 12) respectif est prévu de chaque côté du prisme (17).

4. Feu selon la revendication 2 ou 3, caractérisé en ce que le réflecteur additionnel (11, 12) chevauche le réflecteur (8), vu en direction de la plaque d'éclairement (10).

5. Feu selon l'une quelconque des revendications 1 à 4, caractérisé en ce que les côtés (23, 24) du prisme (17) qui se trouvent dans le trajet des rayons sont pourvus de surfaces spéculaires (25, 26).

6. Feu selon l'une quelconque des revendications 1 à 5, caractérisé en ce que le côté (20) du prisme (17), qui est orienté vers la plaque d'éclairement (10), est pourvu d'un système optique à catadioptre (21).

7. Feu selon l'une quelconque des revendications 1 à 6, caractérisé en ce que le prisme (17) présente un écartement par rapport à la plaque d'éclairement (10).

8. Feu selon l'une quelconque des revendications 1 à 6, caractérisé en ce que le prisme (17) est réalisé d'une seule pièce avec la plaque d'éclairement (10).

9. Feu selon l'une quelconque des revendications 1 à 8, caractérisé en ce que le prisme (17) s'étend sur toute la longueur des chambres (3) comprenant les lampes (5, 5a à 5e).

10. Feu selon l'une quelconque des revendications 2 à 9, caractérisé en ce que le réflecteur additionnel (11, 12) est agencé de telle manière par rapport au réflecteur (8) et au prisme (17) qu'une partie (9) des rayons lumineux réfléchis par le réflecteur (8) tombe sur la plaque d'éclairement (10).

11. Feu selon l'une quelconque des revendications 1 à 10, caractérisé en ce que le prisme (17) se trouve au niveau de la lampe (5).

12. Feu selon l'une quelconque des revendications 1 à 11, caractérisé en ce que la lampe (5a à 5e) est agencée sur le côté du réflecteur (8a à 8e) qui est détourné du prisme (17), ledit réflecteur présentant un orifice de passage (30) pour les rayons lumineux (32).

13. Feu selon la revendication 12, caractérisé en ce qu'un système de réfraction (31) est agencé dans l'orifice de passage (30)

14. Feu selon l'une ou l'autre des revendications 12 ou 13, caractérisé en ce que les rayons lumineux (32) parvenant à travers les orifices de sortie (30) tombent au moins partiellement sur le prisme (18) et sont réfléchis par celui-ci vers le réflecteur (8a à 8e).

15. Feu selon la revendication 14, caractérisé en ce qu'une partie des rayons lumineux (32) tombe directement sur la plaque d'éclairement (10) après avoir traversé l'orifice de sortie (30).

16. Feu selon l'une quelconque des revendications 1 à 15, caractérisé en ce que la lampe (5) est une lampe à incandescence.

17. Feu selon l'une quelconque des revendications 1 à 15, caractérisé en ce que la lampe (5a, 5b) est au moins une diode électroluminescente.

18. Feu selon l'une quelconque des revendications 1 à 15, caractérisé en ce que la lampe (5c à 5e) est un tube au néon.
